# EUROPEAN PATENT APPLICATION

(11) **EP 4 640 070 A1**
(43) Date of publication of application: **29.10.2025**
(21) Application number: 23916377.7
(22) Date of filing: 29.08.2023
(51) Int. Cl.: A23L 13/60, A23L 13/75, A23L 13/70, A23P 10/25, A23L 5/10, A23L 3/005

(54) **METHOD FOR PREPARING RETORT PROCESSED HAM FOR GIMBAP AND RETORT PROCESSED HAM FOR GIMBAP PREPARED THEREBY**

(30) Priority: 12.01.2023 KR 20230004784
(71) Applicant: CJ CheilJedang Corporation, Seoul 04560 (KR)
(72) Inventor: SONG, Minseok, Seoul 04560 (KR); JU, Min Gu, Seoul 04560 (KR); LEE, Seok Jae, Seoul 04560 (KR); PARK, Jae-hyun, Seoul 04560 (KR); LEE, Sean, Seoul 04560 (KR)
(74) Representative: Meissner Bolte Partnerschaft mbB
(86) International application number: PCT/KR2023/012804
(87) International publication number: WO 2024/150893

(57) **Abstract**

The present application relates to a method for preparing retort processed ham for gimbap and report processed ham for gimbap prepared thereby.

## Description

### [Technical Field]

The present disclosure relates to a method for preparing a retort ham for gimbap and a retort ham for gimbap prepared by the method.

### [Background Art]

Retort ham is a product prepared by adding salt, sugar, seasonings, *etc.* that impart taste and flavor to the pork, starch, *etc.* that give some elasticity to the texture and prevent moisture from escaping, and filling the mixed meat into a metallic can, followed by subjecting the meat to a high-temperature, high-pressure retort heat treatment process. A typical retort ham product is Spam.

This type of retort ham is preferred as a food ingredient by consumers because of its unique texture and taste. However, conventional retort ham is inconvenient in that it has to be opened and taken out of a can, does not come in various shapes because it is filled into a can, and must be cut to an appropriate size during cooking.

Accordingly, there has been a need for development of retort ham products which can alleviate the inconvenience of opening and taking out of a can as with the conventional retort ham, since they are manufactured with a plastic packaging similar to regular ham rather than in a can, and provide convenience by creating gouges at appropriate intervals to facilitate cutting during cooking.

However, when retort ham is packaged in plastic without any other treatment, there is a problem in that it is difficult to maintain its shape due to its unique soft yet elastic texture. Accordingly, in the case of cooking gimbap using processed meat that has the same texture as retort ham rather than traditional gimbap ham, it is difficult to cut it to a size suitable for gimbap due to its tendency to lose its shape easily, and the shape is not maintained within the gimbap. Therefore, attempts have been made to develop a manufacturing device of ham for gimbap (Korean Patent No. 10-0855046) that can easily cook gimbap using processed meat with the same texture as retort ham.

### [Disclosure]

### [Technical Problem]

The present disclosure relates to a method for preparing a retort ham for gimbap and a retort ham for gimbap prepared by way of the method.

### [Technical Solution]

One object of the present disclosure is to provide a method for preparing a retort ham.

Another object of the present disclosure is to provide a retort ham prepared by the method of the present disclosure.

### [Advantageous Effects]

The method of the present disclosure enables preparation of a retort ham for gimbap with a soft yet elastic texture and unique taste and flavor, which are unique to retort ham, by molding an aged pork preparation into the shape of gimbap ham, followed by oven heat treatment and retort heat treatment. In addition, the method of the present disclosure improves the characteristic of the conventional retort ham that it easily loses its shape due to its soft yet elastic texture, which is a disadvantage, thereby preparing a retort ham for gimbap that has superior hardness compared to regular ham for gimbap and thus maintains its shape.

### [Brief Description of Drawings]

FIG. 1 is a schematic diagram showing the detailed process of the mixing process.
FIG. 2 is an image of the exterior of the retort ham for gimbap (Preparation Example) of the present disclosure and the regular ham for gimbap (Comparative Example 12) sold on the market.
FIG. 3 is an image showing that Comparative Example 2, in which the low-temperature aging process was performed for 13 hours, exhibited an oil separation phenomenon after the low-temperature aging process, unlike in the Preparation Example, in which the low-temperature aging process was performed for 15 hours.
FIG. 4 is the result of evaluating the easiness of molding by measuring the height of the Preparation Example (Test 1), in which the molded preparation meat was immediately oven-treated to solidify the surface quickly, and Comparative Example 5 (Test 2), in which the molded preparation meat was left to stand and then oven-treated to solidify the surface slowly.
FIG. 5 is the result of measuring the hardness after retort heat treatment of the retort ham for gimbap of the present disclosure (Preparation Example) and the regular ham for gimbap sold on the market (Comparative Example 12).

### [Detailed Description of Preferred Embodiments]

The present disclosure will be described in detail as follows. Meanwhile, each description and embodiment disclosed herein can be applied to other descriptions and embodiments, respectively. That is, all combinations of various elements disclosed herein fall within the scope of the present disclosure. Further, the scope of the present disclosure is not limited by the specific description described below. Additionally, a number of papers and patent documents have been cited throughout the present specification. The content of the cited papers and patent documents is incorporated herein by reference in their entirety and the level of technical field to which the present disclosure belongs and the contents of the present disclosure will be described more clearly.

One aspect of the present disclosure provides a method for preparing a retort ham.

As used herein, the term "retort ham" refers to a product prepared by adding salt, sugar, seasonings, *etc.* that impart taste and flavor to the pork, starch, *etc.* that give some elasticity to the texture and prevent moisture from escaping, and filling the mixed meat into a metallic can, followed by subjecting the meat to a high-temperature, high-pressure retort heat treatment process. A typical retort ham product is Spam.

Retort ham is preferred as a food ingredient by consumers because of its unique texture and taste. However, the conventional retort ham is inconvenient in that it has to be opened and taken out of a can, does not come in various shapes because it is filled into a can, and must be cut to an appropriate size during cooking.

Accordingly, there has been a need for development of retort ham products, which alleviate inconvenience of opening and taking out of a can as with the conventional retort ham, since they are manufactured with a plastic packaging similar to regular ham rather than in a can, and provide convenience by creating gouges at appropriate intervals to facilitate cutting during cooking. However, when retort ham is packaged in plastic without any other treatment, there is a problem in that it is difficult to maintain its shape due to its unique soft yet elastic texture.

The method of the present disclosure enables to prepare a retort ham for gimbap, which provides a soft yet elastic texture and unique taste and flavor, which are unique to retort ham, by molding an aged preparation into the shape of a rectangular cuboid, followed by oven heat treatment and retort heat treatment. In addition, the method of the present disclosure improves the characteristic of the conventional retort ham that it easily loses its shape due to its soft yet elastic texture, which is the disadvantage, thereby preparing a retort ham for gimbap that has superior hardness compared to regular ham for gimbap and thus maintains its shape.

Accordingly, in one embodiment of the present disclosure, the retort ham of the present disclosure may be prepared in a rectangular cuboid shape, specifically in the shape of a square pillar in which one pair of faces is longer than the other pair of faces.

In another embodiment, the length of one pair of faces of the rectangular cuboid shape may be a length corresponding to one side of a rectangular laver used when rolling gimbap, and specifically, the rectangular cuboid shape may have a length of one pair of faces to be 16.5 cm to 18.5 cm, but is not limited thereto.

Specifically, the method of the present disclosure may include:
(a) mixing ground pork with a curing agent, sugar, a seasoning, and starch;
(b) aging the mixed preparation;
(c) nozzle molding the aged preparation;
(d) oven heat-treating the molded preparation;
(e) vacuum packaging the heat-treated preparation with a heat-resistant film; and
(f) subjecting the packaged preparation to retort heat treatment.

In the method of the present disclosure, Step (a) may be mixing ground pork with a curing agent, sugar, a seasoning and starch.

The method of the present disclosure may further include removing cartilage, fascia, blood vessels, *etc.* that may have an undesirable effect on the texture and sensory characteristics while selecting pork before Step (a). The step of removing cartilage, fascia, and blood vessels while selecting pork may be performed at 0°C to 9°C.

The grinding may be cutting the pork into a range consisting of an upper limit selected from 4 mm or less, 3 mm or less, 2 mm or less, and 1 mm or less, and may specifically be cutting the pork into a size of 1 mm to 4 mm.

In the present disclosure, when the pork is cut to a size exceeding the above numerical range, a problem may arise that the surface of the retort ham for gimbap may be uneven and bumpy, making it unsuitable for cooking gimbap.

In addition, when the pork is cut to a size less than the above numerical range, problems, such as the pork preparation may be sticky and the shape may not be maintained after molding, the fat components may be separated after heat treatment, or the particles of the final product may become weak, may occur.

Further, the cartilage, fascia, blood vessels, *etc.* can be further separated mechanically during the grinding process.

Through the above-described grinding process, the preparation may be easily mixed with a curing agent in the subsequent process and may have a constant shape during molding.

Step (a) may be performed at a temperature of less than 10°C, specifically at 0°C to 9°C. In one example, Step (a) may be performed at a temperature range consisting of an upper limit selected from 9°C or lower, 8°C or lower, 7°C or lower, 6°C or lower, and 5°C or lower.

The mixing may include (i) rotating at 35 rpm to 55 rpm for 1 to 3 minutes; and (ii) rotating at 35 rpm to 55 rpm for 3 to 5 minutes under vacuum.

In one embodiment, the step of rotating at 35 rpm to 55 rpm for 1 to 3 minutes in (i) may be repeated 2 to 4 times. In one example, the step of rotating at 35 rpm to 55 rpm for 1 to 3 minutes in step (i) may be repeated 2, 3, or 4 times, and may be performed by appropriately adjusting the rotation speed and number of repetitions by those skilled in the art depending on the mixing state of the pork and the curing agent.

In one example, the mixing temperature of (i) may be within a range consisting of a lower limit selected from 1 minute or more, 1 minute and 30 seconds or more and 2 minutes or more and/or an upper limit selected from 3 minutes or less, 2 minutes 30 seconds or less, and 2 minutes or less. In addition, the mixing time of (i) may be within a range consisting of a lower limit selected from 35 rpm or more, 37 rpm or more and 40 rpm or more and/or an upper limit selected from 55 rpm or less, 53 rpm or less, and 50 rpm or less.

Specifically, when Step (i) is performed once, the pork and the curing agent may be mixed and homogenized.

When Step (i) is repeated twice, the salt-soluble proteins in the preparation may be eluted.

When Step (i) is repeated three times, flavor and juiciness may be imparted to the preparation.

When Step (i) is repeated four times, free moisture in the preparation may be removed.

In another embodiment, Step (ii) of rotating at 35 rpm to 55 rpm for 3 to 5 minutes under vacuum may be performed under a vacuum of 0.01 MPa to 0.1 MPa. Step (ii) may be performed by those skilled in the art by appropriately adjusting the time, rotation speed, and vacuum pressure depending on the mixing state of the pork and the curing agent.

In one example, the mixing temperature of (ii) may be within a range consisting of a lower limit selected from 3 minutes or more, 3 minutes and 30 seconds or more, and 4 minutes or more. The mixing time of (ii) may be within a range consisting of a lower limit selected from 35 rpm or more, 37 rpm or more and 40 rpm or more and/or an upper limit selected from 55 rpm or less, 53 rpm or less, and 50 rpm or less. In addition, the vacuum pressure at the time of mixing in (ii) may be within a range consisting of a lower limit selected from 0.01 MPa or more, 0.05 MPa or more, and 0.07 MPa or more and/or an upper limit selected from 0.1 MPa or less, 0.095 MPa or less, and 0.09 MPa or less.

In still another embodiment, Step (ii) of rotating at 35 rpm to 55 rpm for 3 to 5 minutes may be performed three times. In particular, the direction of rotation may alternate between forward and reverse directions, but is not limited thereto.

In the method of the present disclosure, the mixed preparation of ground pork, curing agent, sugar, seasoning, and starch may contain 60% to 88% by weight of the ground pork, 0.5% to 3.5% by weight of the curing agent, 0.5% to 2% by weight of the sugar, 0.1% to 0.2% by weight of the seasoning, and 1% to 2.5% by weight of the starch, based on the total weight of the preparation.

The ground pork may be contained in an amount of 60% to 88% by weight based on the total weight of the preparation. In one example, the ground pork may be contained within a range consisting of a lower limit selected from 60% by weight or more, 62% by weight or more, 64% by weight or more, 66% by weight or more, and 68% by weight or more and/or an upper limit selected from 88% by weight or less, 78% by weight or less, 76% by weight or less, 74% by weight or less, and 72% by weight or less, based on the total weight of the preparation.

The curing agent may be contained in an amount of 0.5% to 3.5% by weight based on the total weight of the preparation. In one example, the curing agent may be contained within a range consisting of a lower limit selected from 0.5% by weight or more, 0.6% by weight or more, 0.7% by weight or more, 0.8% by weight or more, and 0.9% by weight or more and/or an upper limit selected from 3.5% by weight or less, 3% by weight or less, 2.5% by weight or less, 2% by weight or less, and 1.5% by weight or less, based on the total weight of the preparation.

The sugar may be contained in an amount of 0.5% to 2% by weight based on the total weight of the preparation. In one example, the sugar may be contained within a range consisting of a lower limit selected from 0.5% by weight or more, 0.7% by weight or more, 0.9% by weight or more, and 1.1% by weight or more and/or an upper limit selected from 2% by weight or less, 1.8% by weight or less, 1.6% by weight or less, and 1.4% by weight or less, based on the total weight of the preparation.

The seasoning may be contained in an amount of 0.1% to 0.2% by weight based on the total weight of the preparation. In one example, the seasoning may be contained within a range consisting of a lower limit selected from 0.1% by weight or more, 0.12% by weight or more, 0.14% by weight or more, and 0.15% by weight or more and/or an upper limit selected from 0.2% by weight or less, 0.18% by weight or less, 0.16% by weight or less, and 0.15% by weight or less, based on the total weight of the preparation.

The starch may be contained in an amount of 1% to 2.5% by weight based on the total weight of the preparation. In one example, the starch may be contained within a range consisting of a lower limit selected from 1% by weight or more, 1.2% by weight or more, 1.4% by weight or more, and 1.6% by weight or more and/or an upper limit selected from 2.5% by weight or less, 2.3% by weight or less, 2.1% by weight or less, and 1.9% by weight or less, based on the total weight of the preparation.

Step (a) may include mixing by further adding purified water.

The purified water may be contained in an amount of 2% to 4% by weight based on the total weight of the preparation. In one example, the purified water may be contained within a range consisting of a lower limit selected from 2% by weight or more, 2.3% by weight or more, 2.6% by weight or more, and 2.9% by weight or more and/or an upper limit selected from 4% by weight or less, 3.7% by weight or less, 3.4% by weight or less, and 3.1% by weight or less, based on the total weight of the preparation.

In one embodiment of the present disclosure, the preparation may contain 60% to 88% by weight of the ground pork, 0.5% to 3.5% by weight of the curing agent, 0.5% to 2% by weight of the sugar, 0.1% to 0.2% by weight of the seasoning, and 1% to 2.5% by weight of the starch, and 2% to 4% by weight of the purified water, based on the total weight of the preparation.

Through the above-mentioned mixing process, the mixture can be well maintained without deformation in its shape after molding in the subsequent process until the product packaging stage.

In the method of the present disclosure, Step (b) may be aging the mixed preparation.

The aging may be aging the mixed preparation prepared in Step (a).

The aging may be aging the mixed preparation at 1°C to 5°C. The aging may be aging the mixed preparation for 15 to 18 hours.

In one example, the aging temperature may be within a range consisting of a lower limit selected from 1°C or higher, 2°C or higher, 3°C or higher, and 4°C or higher and/or an upper limit selected from 5°C or lower, 4°C or lower, 6°C or lower, and 2°C or lower. In addition, the aging time may be within a range consisting of a lower limit selected from 15 hours or more, 15 hours and 30 minutes or more, 16 hours or more, and 16 hours and 30 minutes or more and/or an upper limit selected from 18 hours or less, 17 hours and 30 minutes or less, 17 hours or less, and 16 hours and 30 minutes or less.

In the present disclosure, when the aging is carried out beyond the above temperature or time range, problems may arise in that the moisture in the pork may be lost, and the texture may become hard, thus reducing preference, and microorganisms may proliferate, which may decrease microbial safety.

In addition, when the aging is carried out below the above temperature or time range, oil separation may occur after the low-temperature aging process, which may reduce the quality of the prepared retort ham.

The aging may be low-temperature aging performed at low temperature.

Through the low-temperature aging process described above, the salt-soluble proteins eluted during the mixing process and the emulsified substrates in the preparation are stabilized, so that the shape after molding in the subsequent process may be maintained without deformation until the product packaging stage, the possibility of oil and water separation may be minimized, and the sensory characteristics that imparts a unique aging flavor may be improved.

In the method of the present disclosure, Step (c) may be nozzle molding the aged preparation.

The shape during the molding is not particularly limited, and for example, it may be a rectangular cuboid shape with a certain size, specifically a square pillar shape in which one pair of faces is longer than the other pair of faces, and it may be in the form of commonly sold ham for gimbap, which is as described above. Specifically, the form of ham for gimbap may be in a form in which the ham has gouges that can be cut into a certain rectangular cuboid shape to facilitate gimbap making, or a form in which the ham is cut into a certain rectangular cuboid shape in the size that can be fit into of gimbap.

The molding can be performed using any method or means of molding food or food raw materials known in the art without limitation. Generally, ham for gimbap is manufactured by a nozzle molding method or a retainer molding method, and products manufactured by nozzle molding have gouges in the size that can be fit into gimbap, so that it can be easily cut into a certain size and shape by taking it apart by hand or cutting it with a knife. In contrast, ham for gimbap manufactured by retainer-type does not have gouges, and thus it may be difficult to cut into a certain size and shape.

The molding may be performed, for example, in a stuffer equipped with a nozzle molding machine. The nozzle molding machine is an equipment that includes nozzles with 1 to 20 different shapes (*e.g*., round, oval, square, rectangular, star, *etc*.) and can control the discharge amount of mixed meat with a tightening screw at the top, and may be connected to a stuffer so that the mixed meat can be discharged through the nozzles while providing various forms described above.

The method of the present disclosure may further include confirming the temperature of the aged preparation before nozzle molding.

In one embodiment of the present disclosure, the temperature of the aged preparation before nozzle molding may be 0°C or higher, 1°C or higher, 2°C or higher, 3°C or higher, 4°C or higher, 5°C or higher, 6°C or higher, 7°C or higher, 8°C or higher, 9°C or higher and less than 10°C, and may specifically be within the temperature range of 0°C to 9°C.

In the method of the present disclosure, Step (d) may be oven heat-treating the molded preparation.

The oven heat treatment may be a heat treatment at 110°C to 120°C. The oven heat treatment may be a heat treatment for 6 to 8 minutes.

The temperature during the oven heat treatment may be within a range consisting of a lower limit selected from 110°C or higher, 112°C or higher, 114°C or higher, 116°C or higher and 118°C or higher and/or an upper limit selected from 120°C or lower, 118°C or lower, 116°C or lower, 114°C or lower, and 112°C or lower. In addition, the oven heat treatment time may be within a range consisting of a lower limit selected from 6 minutes or more, 6 minutes and 30 seconds or more, 7 minutes or more, 7 minutes and 30 seconds or more, and 7 minutes and 50 seconds or more and/or an upper limit selected from 8 minutes or less, 8 minutes and 50 seconds or less, 8 minutes 40 seconds or less, 8 minutes 30 seconds or less, and 8 minutes 20 seconds or less.

In the present disclosure, when the heat treatment is performed exceeding the above temperature or time range, fat may be excessively eluted, resulting in a hard and chewy texture, which may reduce preference.

In addition, when the heat treatment is performed below the above temperature or time range, problems may arise in that cooking and sterilization may not be carried out properly, which not only reduces flavor but also causes hygiene problems, or the shape of the product may not be fixed after heat treatment, and thus the product may spread to the sides, may break when cooled and/or the shape of the exterior may be deformed during packaging.

Through the oven heat treatment described above, the shape of the preparation can be maintained by cooking the exterior and rapidly solidifying the surface.

In one embodiment of the present disclosure, the oven heat treatment may be performed immediately after molding. In another embodiment of the present disclosure, the oven heat treatment may be performed within at least 1 minute, within 2 minutes, within 4 minutes, within 6 minutes, within 8 minutes, or within 9 minutes after molding, and specifically, within a time range of 1 to 9 minutes or less.

In addition, in order to ensure microbial safety before packaging following oven heat treatment and/or before retort heat treatment after packaging, the core temperature of the preparation after oven heat treatment may be within a range consisting of a lower limit selected from 67°C or higher, 68°C or higher, 70°C or higher, 71°C or higher, and 72°C or higher.

The method of the present disclosure may further include direct fire cooking after oven heat treatment.

The direct fire cooking may be creating a grilled appearance on the exterior of the mixture using a torch.

In one example, the height of the torch can be adjusted so that the cut mixed meat passes through the middle of the flame.

In another example, the direct fire cooking may be treating the oven heat-treated preparation with a torch for 3 to 30 seconds. For example, the torch processing time may be performed within a range consisting of an upper limit selected from 30 seconds or less, 25 seconds or less, 20 seconds or less, 15 seconds or less, 10 seconds or less, 7 seconds or less, and 5 seconds or less.

In the present disclosure, when the direct fire cooking is performed exceeding the above time range, the exterior surface of the preparation may be excessively carbonized, which may reduce the quality of the prepared retort ham. In addition, when the direct fire cooking is performed for less than the above time range, a naturally grilled appearance may not be implemented.

The complex oven heat treatment may further include cutting the oven heat-treated preparation to an appropriate length before direct fire cooking. The cutting length may be appropriately adjusted by those skilled in the art.

The method of the present disclosure may further include cooling after oven heat treatment. The cooling may include, but is not limited to, cold-air cooling or rapid freezing.

The cooling may be performed by methods known in the art. In one example, the cooling may be performed at -5°C to 1°C for 5 to 15 minutes, but is not limited thereto.

The cooling temperature may be within a range consisting of an upper limit selected from 1°C or lower, 0°C or lower, -1°C or lower, -2°C or lower, -3°C or lower, -4°C or lower, and -5°C or lower. In addition, the cooling time may be within a range consisting of a lower limit selected from 5 minutes or more, 6 minutes or more, 7 minutes or more, and 8 minutes or more and/or an upper limit selected from 15 minutes or less, 14 minutes or less, 13 minutes or less, 12 minutes or less, 11 minutes or less, and 10 minutes or less.

In the method of the present disclosure, Step (e) may be vacuum packaging the heat-treated preparation with a heat-resistant film.

The vacuum packaging may be performed by methods known in the art. The vacuum packaging may be vacuum packaging the preparation using a waterproof, light-blocking, oxygen-blocking, and/or heat-resistant packaging material, and more specifically using a waterproof, light-blocking, oxygen-blocking, and/or heat-resistant film, but it is not limited thereto.

The vacuum packaging step allows the preparation to maintain microbial safety, and product appearance and color after the subsequent retort process is completed.

In the method of the present disclosure, Step (f) may be subjecting the packaged preparation to a retort heat treatment.

The retort heat treatment may be sterilizing the preparation by immersing it in hot water. The preparation may be vacuum packaged prior to retort heat treatment, as described above.

The retort heat treatment may include primary sterilization by heat treatment at 100°C to 120°C for 1 to 10 minutes; secondary sterilization by heat treatment at 105°C to 125°C for 1 to 10 minutes; and tertiary sterilization by heat treatment at 110°C to 130°C for 15 to 35 minutes.

The temperature during the primary sterilization may be within a range consisting of a lower limit selected from 100°C or higher, 102°C or higher, 104°C or higher, 106°C or higher, 108°C or higher, and 109°C or higher and/or an upper limit selected from 120°C or lower, 118°C or lower, 116°C or lower, 114°C or lower, 112°C or lower, and 111°C or lower. In addition, the time for the primary sterilization may be within a range consisting of a lower limit selected from 1 minute or more, 2 minutes or more, 4 minutes or more, 6 minutes or more, 8 minutes or more, and 9 minutes or more and/or an upper limit selected from 10 minutes or less, 9 minutes or less, and 8 minutes or less, 7 minutes or less, 6 minutes or less, and 5 minutes or less.

The temperature during the secondary sterilization may be within a range consisting of a lower limit selected from 105°C or higher, 107°C or higher, 109°C or higher, 111°C or higher, 113°C or higher and 115°C or higher and/or an upper limit selected from 125°C or lower, 123°C or lower, 121°C or lower, 120°C or lower, and 119°C or lower. In addition, the time for the secondary sterilization may be within a range consisting of a lower limit selected from 1 minute or more, 2 minutes or more, 4 minutes or more, 6 minutes or more, 8 minutes or more, and 9 minutes or more and/or an upper limit selected from 10 minutes or less, 9 minutes or less, and 8 minutes or less, 7 minutes or less, 6 minutes or less, and 5 minutes or less.

The temperature during the tertiary sterilization may be within a range consisting of a lower limit selected from 110°C or higher, 112°C or higher, 114°C or higher, 116°C or higher and 117°C or higher and/or an upper limit selected from 130°C or lower, 128°C or lower, 126°C or lower, 124°C or lower, 122°C or lower, and 120°C or lower. In addition, the time for the tertiary sterilization may be within a range consisting of a lower limit selected from 15 minutes or more, 17 minutes or more, 19 minutes or more, 21 minutes or more, 23 minutes or more, and 24 minutes or more and/or an upper limit selected from 35 minutes or less, 33 minutes or less, and 31 minutes, 29 minutes or less, 27 minutes or less, and 26 minutes or less.

The retort heat treatment of the present disclosure reduces the temperature shock applied to the preparation by performing preliminary sterilization up to the second time, which gradually raise the temperature until the main sterilization temperature is reached, followed by main sterilization. Accordingly, oil separation and water separation are minimized after the retort heat treatment process, thereby minimizing the decrease in quality of the prepared retort ham.

In addition, after the oven heat treatment process, the texture of the mixed meat becomes hard and does not have the unique taste of retort ham, and retort ham prepared by the retort heat treatment process can have a soft yet elastic texture and unique taste and flavor, which are unique to retort ham.

The method of the present disclosure may further include cooling after retort heat treatment.

The cooling may include, but is not limited to, cold-air cooling or rapid freezing.

The cooling may be performed by methods known in the art. In one example, the cooling may be performed at 20°C to 30°C for 5 to 30 minutes, but is not limited thereto. The cooling may be performed once, or may be repeated two or more times. In one embodiment, the cooling includes primary cooling at 20°C to 30°C for 5 to 30 minutes; and secondary cooling at 20°C to 30°C for 5 to 30 minutes.

The cooling temperature may be within a range consisting of a lower limit selected from 20°C or higher, 21°C or higher, 22°C or higher, 23°C or higher and 24°C or lower and/or an upper limit selected from 30°C or lower, 29°C or lower, 28°C or lower, 27°C or lower, and 26°C or lower. In addition, the cooling time may be within a range consisting of a lower limit selected from 5 minutes or more, 6 minutes or more, 7 minutes or more, 8 minutes or more, and 9 minutes or more and/or an upper limit selected from 30 minutes or less, 25 minutes or less, 20 minutes or less, 15 minutes or less, 13 minutes or less, and 11 minutes or less.

Additionally, the method of the present disclosure may further include packaging the retort heat-treated preparation.

Through the above packaging step, discoloration of the retort heat-treated preparation, i.e., retort ham, from exposure to light for a long time may be prevented.

The method of the present disclosure may minimize the risk of off-flavor and microbial growth caused by the remaining moisture by removing moisture remaining on the outer surface of the vacuum-packed packaging material before the packaging step.

The retort ham prepared by the method of the present disclosure may further include auxiliary materials.

The auxiliary materials may be, for example, sweeteners, acidity regulators, flavoring agents, refined salts, or stabilizers, but are not limited thereto, and may further include known materials commonly used in manufacturing retort ham.

The retort ham prepared by the method of the present disclosure may have a hardness of 1.1 kg or more. In one example, the retort ham of the present disclosure may have a hardness of 1.1 kg to 2.5 kg. In another example, the retort ham of the present disclosure may have a hardness in a range consisting of a lower limit selected from 1.1 kg or more, 1.3 kg or more, 1.7 kg or more, 1.9 kg or more, and 2 kg or more and/or an upper limit selected from 2.5 kg or less, 2.3 kg or less, 2.2 kg or less, and 2.1 kg or less.

The retort ham of the present disclosure has a soft yet elastic texture and unique taste and flavor, which are unique to retort ham, and has a superior hardness compared to regular ham for gimbap, and thus, it does not lose its shape, thereby providing convenience in cooking food such as gimbap that must maintain its shape.

Another aspect of the present disclosure provides a retort ham prepared by the method of the present disclosure.

The retort ham is as described above.

### [Mode for Carrying Out the Invention]

Hereinafter, the present disclosure will be described in detail by way of Examples. However, these Examples are merely preferred Examples given for I llustrative purposes, and thus, the scope of the invention is not intended to be limited to or by these Examples. Meanwhile, technical features which are not described herein can be sufficiently understood and easily carried out by those skilled in the art in the technical field of the present disclosure or in a similar technical field.

### Preparation Example

Retort ham for gimbap was prepared by the following method.

### 1) Selecting process

Fresh pork (pork sholder, ham, and pork fat) was visually selected at a temperature below 10°C to remove cartilage, fascia, and blood vessels that could adversely affect texture and sensory characteristics.

### 2) Grinding process

The selected pork was ground to a uniform size in a chopper machine by setting the plate that determines the particle size of the pork to 3 mm. Through the grinding process, it was easy to mix with salt, sugar, seasoning, starch, *etc.* in the subsequent process, and a uniform shape was maintained when molded. During the grinding process, the cartilage, fascia, and blood vessels were further separated mechanically.

### 3) Mixing process

88% by weight of ground pork was added to a mixer, and 3.5% by weight of a curing agent, 2% by weight of sugar, 0.2% by weight of a seasoning, 2.5% by weight of starch, and 4% by weight of purified water were sequentially added thereto and mixed to impart taste and flavor to the pork, and salt-soluble proteins were eluted as much as possible to form cohesion between pork particles. Through the mixing process, the shape after molding in the subsequent process was well maintained without deformation until the product packaging stage.

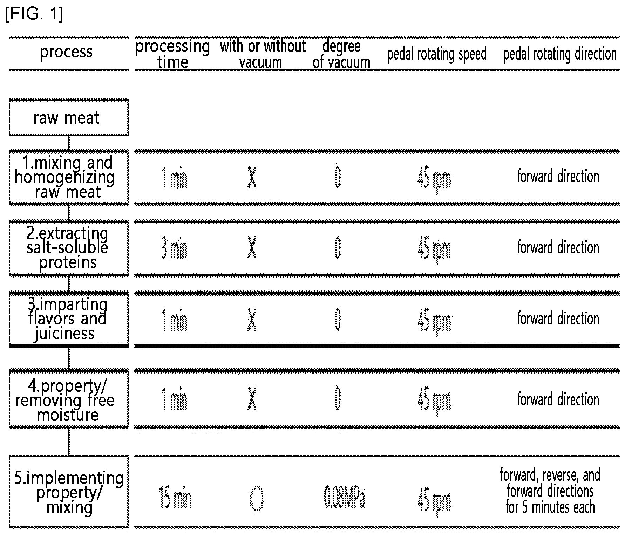

The specific mixing process of mixed meat (raw meat) is as shown in FIG. 1.

Specifically, salt, sugar, seasoning, starch, and purified water were added to the pork, and the mixture was mixed and homogenized by rotating forward at 45 rpm for 1 minute, and then rotated forward at 45 rpm for 3 minutes to elute salt-soluble proteins, rotated forward at 45 rpm for 1 minute to impart flavor and juiciness, rotated forward at 45 rpm for 1 minute to remove free moisture, and then rotated forward, reverse, and forward for 5 minutes each at 45 rpm under a vacuum condition of 0.08 MPa to remove free moisture and elute salt-soluble protein, thereby preparing a mixed meat, in which cohesion was formed between pork particles. The mixing process was performed at a temperature below 10°C, and the temperature of the mixed meat upon completion of the mixing process was ensured not to exceed 10°C.

### 4) Low-temperature aging process

The mixed meat was aged and cured for 15 to 18 hours at a low temperature condition of 5°C or lower. Through the low-temperature aging process, the salt-soluble proteins eluted in the mixing process and the emulsified substrates in the mixed meat were stabilized, ensuring that the shape after molding in the subsequent process was maintained without deformation until the product packaging stage, the possibility of oil and water separation was minimized, and the sensory characteristics were improved by imparting unique aging flavors.

### 5) Nozzle molding process

The mixed meat that had completed aging in the low-temperature aging process was confirmed to be between 0°C and 10°C and placed in a stuffer equipped with a nozzle molding machine. The discharge adjustment screw of the nozzle molding machine was adjusted to ensure that an appropriate amount was discharged.

### 6) Oven heat treatment process

The mixed meat, which had been discharged from the nozzle molding machine and molded, was placed in a GS oven (GSO-50100J, ASAHI SOSETSU Co., LTD., JAPAN) immediately after molding, and treated with steam at 110°C to 120°C for 8 minutes to quickly solidify the surface, thereby maintaining the shape. In order to ensure microbial safety after the oven heat treatment and before the retort heat treatment process, the core temperature of the mixed meat was maintained at 72°C or higher.

### 7) Cutting process

The oven-heated mixed meat was cut to a certain length of 225 mm to 235 mm, corresponding the length of laver for gimbap generally distributed. Through the cutting process, it provided convenience so that gimbap could be cooked right away without additional cutting process.

### 8) Flame-Grill process

The cut mixed meat was passed through a Flame-grill torch machine to create a grilled appearance. In particular, the height of the torch was adjusted so that the cut mixed meat passed through the middle of the flame, creating a natural grilled appearance. Additionally, the conveyor speed was adjusted so that the cut mixed meat passed through the flame for 5 seconds.

### 9) Rapid freezing and vacuum packaging process

The direct-fired mixed meat was rapidly cooled at 1°C for 9 minutes, and after the subsequent retort process was completed, waterproof, light-blocking, oxygen-blocking, and heat-resistant packaging materials were used to for vacuum packaging to maintain microbial safety, and product appearance and color.

### 10) Retort heat treatment process

The vacuum-packed mixed meat was loaded in an appropriate amount on a retort cart, and preliminary sterilization was performed up to the second time by immersing the meat in purified water whose temperature was gradually raised until it reached the main sterilization temperature as shown in Table 1 below, and then, the main sterilization was performed.

**[Table 1]**

| Step | Process | Temperature | Processing Time (min) |
|---|---|---|---|
| Step 1 | Preliminary sterilization | 110°C | 4 |
| Step 2 | Preliminary sterilization | 116°C | 4 |
| Step 3 | Main sterilization | 118°C | 25 (F₀: 4 or more*) |
| Step 1 | Cooling | 25°C | 10 |
| Step 2 | Cooling | 25°C | 10 |

| | | | |
|---|---|---|---|
| *: shows total sterilization effect equivalent to 4 minutes or more at a standard temperature of 121.1°C. | | | |

After completion of the main sterilization, cooling was performed up to the second time to ensure microbial safety and stabilize the proteins and fats in the mixed meat. After the oven heat treatment process, the texture of the mixed meat was hard and did not have the unique taste of retort ham, and thus, the retort heat treatment process was used to provide a soft yet elastic texture and unique taste and flavor, which are unique to retort ham.

### 11) Packaging process

According to the retort heat treatment process, the remaining moisture on the outer surface of the packaging material was removed by an air blower, thereby minimizing the risk of off-flavor and microbial growth caused by moisture remaining on the outer surface of the packaging material during future product distribution.

An aluminum film was used to wrap the outer surface of the packaging material, from which moisture was removed, with three adhesive sides to prevent discoloration from exposure to light for a long time.

### Comparative Examples

### Comparative Example 1: the Preparation of Retort Ham for Gimbap under Different Temperature Conditions in Selection Process and Mixing Process

The selection process and mixing process were performed at a temperature of 10°C or higher, and retort ham for gimbap prepared in the same manner as in the Preparation Example above was used in Comparative Example 1.

### Comparative Example 2: the Preparation of Retort Ham for Gimbap under Different Time Conditions of Low-Temperature Aging Process

The low-temperature aging process was performed at a temperature of 5°C or lower for 13 hours, and retort ham for gimbap prepared in the same manner as in the Preparation Example above was used in Comparative Example 2.

### Comparative Example 3: the Preparation of Retort Ham for Gimbap under Different Retort Heat Treatment Process Conditions

In the retort heat treatment process, preliminary sterilization was performed at 110°C, followed by main sterilization at 118°C, and retort ham for gimbap prepared in the same manner as in the Preparation Example above was used in Comparative Example 3.

### Comparative Example 4: the Preparation of Retort Ham for Gimbap with Different Particle Sizes

In the grinding process, the plate that determines the particle size of the pork was set to 5 mm to grind the pork, and retort ham for gimbap prepared in the same manner as in the Preparation Example above was used in Comparative Example 4.

### Comparative Example 5: the Preparation of Retort Ham for Gimbap with Oven heat treatment not Immediately After Molding Mixed Meat

The mixed meat, which had been discharged from the nozzle molding machine and molded, was left to stand for 10 minutes, and then oven heat-treated to solidify the surface slowly. Retort ham for gimbap prepared in the same manner as in the Preparation Example above was used in Comparative Example 5.

### Comparative Example 6: the Preparation of Retort Ham for Gimbap under Different Temperature Conditions of Oven heat treatment Process

The oven heat treatment process was performed with steam at 200°C for 10 minutes, and retort ham for gimbap prepared in the same manner as in the Preparation Example above was used in Comparative Example 6.

### Comparative Examples 7-9: the Preparation of Retort Ham for Gimbap using Complex Oven heat treatment Process

In the oven heat treatment process, the mixed meat was subjected to GS oven heat treatment under the conditions shown in Table 2 below, followed by superheated steam oven heat treatment, and retort ham for gimbap prepared in the same manner as in the Preparation Example above was used in Comparative Examples 7 to 9.

**[Table 2]**

| | GS Oven Condition | Superheated Steam Oven Conditions |
|---|---|---|
| Preparation Example | 110°C/8 min | Not performed |
| Comparative Example 7 | 110°C/8 min | 200°C/1 min 23 sec |
| Comparative Example 8 | 110°C/8 min | 250°C/1 min 23 sec |
| Comparative Example 9 | 110°C/8 min | 300°C/1 min 23 sec |

### Comparative Examples 10-11: the Preparation of Retort Ham for Gimbap under Different Direct Fire Cooking Process Conditions

In the direct fire cooking process, the height of the torch was adjusted so that the cut mixed meat passed through the middle of the flame, and the direct fire cooking was performed by adjusting the conveyor speed so that the cut mixed meat passed through the flame for 3 or 40 seconds. Retort ham for gimbap prepared in the same manner as in the Preparation Example above was used in Comparative Examples 10 and 11, respectively.

### Comparative Example 12: Commercial Ham for Gimbap

The commercial ham for gimbap (Jubu 9-dan gimbap ham, manufactured by Moguchon) sold on the market was used in Comparative Example 12.

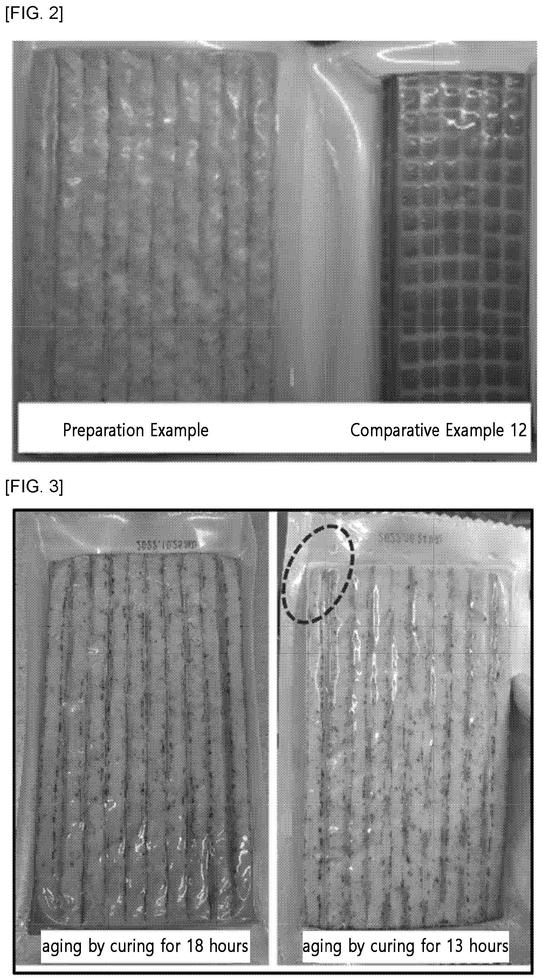

The commercial ham for gimbap of Comparative Example 12 and the retort ham for gimbap of the Preparation Example are shown in FIG. 2.

### Experimental Examples

### Experimental Example 1: Evaluation of Oil Separation and Water Separation of Retort Ham for Gimbap According to Temperature Conditions

The oil separation and water separation of the retort ham for gimbap were confirmed by the appearance evaluation according to the internal standards after vacuum packaging, and the completion of the retort heat treatment process and cold-air cooling.

As a result, Comparative Example 1, in which the selection and mixing processes were performed at a temperature of 10°C or higher, exhibited oil separation and water separation after the oven heat treatment process and the retort heat treatment process, unlike in the Preparation Example, in which the selection and mixing processes were performed at a temperature less than 10°C.

In Comparative Example 2, in which the low-temperature aging process was performed for 13 hours, an oil separation occurred after the low-temperature aging process, unlike in the Preparation Example, in which the low-temperature aging process was performed for 15 hours (FIG. 3).

In addition, Comparative Example 3, in which the preliminary sterilization was performed at 110°C, followed by the main sterilization at 118°C in the retort heat treatment process, exhibited oil separation and water separation after the retort heat treatment process, unlike in the Preparation Example, in which the preliminary sterilization was performed up to the second time, which gradually raised the temperature until the main sterilization temperature was reached, followed by the main sterilization.

Therefore, in order to minimize the deterioration of product quality due to the oil separation and water separation, it was appropriate that the selection and mixing processes are performed at a temperature of less than 10°C, the low-temperature aging process is performed for 15 to 18 hours, and the retort heat treatment process is performed by gradually increasing the temperature from the primary preliminary sterilization at 110°C, the secondary preliminary sterilization at 116°C and the main sterilization at 118°C.

### Experimental Example 2: Appearance Evaluation

The appearance of the retort ham for gimbap was confirmed by appearance the evaluation according to the internal standards after vacuum packaging, and the completion of retort heat treatment process and cold-air cooling.

In Comparative Example 4, in which the pork was cut into a particle size of 5 mm in the grinding process, unlike in the Preparation Example, in which the pork was cut into a particle size of 3 mm, the surface of the retort ham for gimbap was uneven and bumpy, making it unsuitable for cooking gimbap.

In addition, unlike in the Preparation Example, in Comparative Example 11, in which the time to pass through the flame was slow in the direct fire cooking process, the outer surface of the retort ham for gimbap was excessively carbonized, and in Comparative Example 10, in which the time to pass through the flame was fast, a naturally grilled appearance was not implemented.

Accordingly, in order to implement a naturally grilled appearance that is suitable for cooking gimbap, it was confirmed that it was appropriate to cut the pork into a particle size of 3 mm or less in the grinding process, and perform the direct fire cooking process such that the cut mixed meat passes through the flame for a minimum of 5 seconds and a maximum of 30 seconds.

### Experimental Example 3: Evaluation of Molding Easiness

The molding easiness of the retort ham for gimbap was confirmed by measuring the height of the mixed meat before and after the oven heat treatment process.

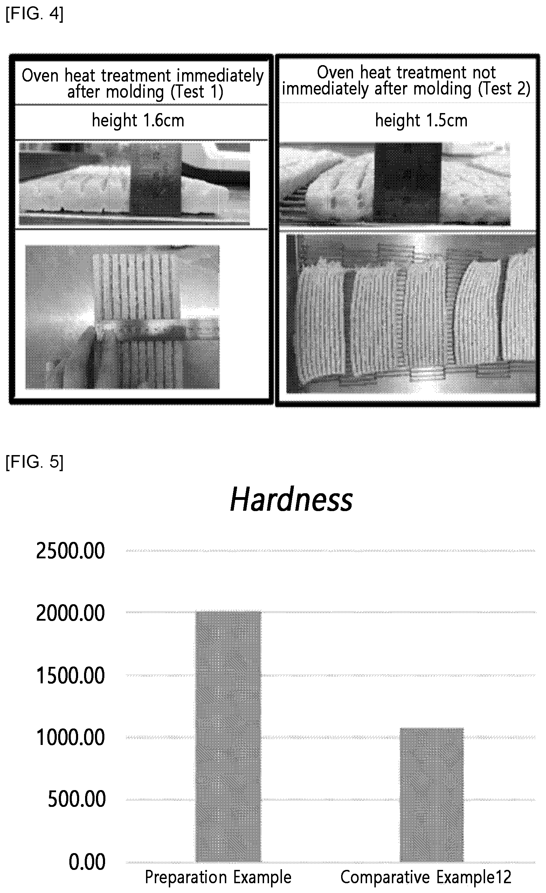

It was confirmed that in Comparative Example 5 (Test 2), in which the mixed meat, which had been discharged from the nozzle molding machine and molded, was left to stand for 10 minutes, followed by oven heat treatment to solidify the surface slowly, the meat did not maintain its unique shape and was deeply embedded in the oven's chain belt due to gravity and spread laterally, which decreased its height, unlike in the Preparation Example 1 (Test 1), in which the molded mixed meat was immediately oven heat-treated to quickly solidify the surface (FIG. 4)

Accordingly, in order to maintain the shape of the retort ham for gimbap, it was confirmed that it was appropriate to perform the oven heat treatment of the mixed meat, which had been discharged from the nozzle molding machine and molded, immediately after molding

### Experimental Example 4: Sensory Evaluation

For the sensory test, 10 trained researchers were asked to taste the food, and then the texture, dryness, moistness, and overall preference were evaluated based on internal sensory evaluation standards.

Comparative Example 6, in which the oven heat treatment process was performed with steam at 200°C for 10 minutes, exhibited a hard and dry texture due to excessive elution of moisture and fat, unlike in the Preparation Example, in which the oven heat treatment process was performed with steam at 110°C for 8 minutes.

Accordingly, in order to ensure that the retort ham for gimbap has a soft yet elastic texture and unique taste and flavor, which are unique to retort ham, it was appropriate to perform the oven heat treatment process at 120°C and not exceeding 10 minutes.

### Experimental Example 5: Oven Yield Evaluation

Oven yield was analyzed by measuring the weight before and after the oven heat treatment and calculating the ratio of the difference.

Comparative Examples 7 to 9, in which superheated steam oven heat treatment was performed after GS oven heat treatment under the conditions of Table 2, could further increase the core temperature of the mixed meat, unlike in the Preparation Example, in which the GS oven heat treatment was performed alone, but when cooled at 1°C for 9 minutes after the oven heat treatment, the oven yield was relatively reduced as the outer surface was dried due to superheated steam oven treatment (Table 3).

**[Table 3]**

| | Oven yield |
|---|---|
| Preparation Example | 100% |
| Comparative Example 7 | 97.53% |
| Comparative Example 8 | 97.86% |
| Comparative Example 9 | 96.68% |

Accordingly, in order to ensure that the retort ham for gimbap has a soft yet elastic texture unique to retort ham, it was confirmed that it was appropriate to perform the oven heat treatment process solely by GS oven heat treatment.

### Experimental Example 6: Evaluation of Hardness

The hardness of the retort ham for gimbap after the retort heat treatment process was analyzed using a texture analyzer under the conditions in Table 4 below. For the measurement, the sample was shaped to a size of width 10 mm × length 15 mm × height 15 mm, and a 9 mm disc-shaped probe was used.

**[Table 4]**

| Sample | Width 10 mm × Length 15 mm × Height 15 mm |
|---|---|
| Probe | 9 mm |
| Part Code | P/100 |
| Distance | 8 mm |
| Test speed | 5 mm/sec |
| Post test speed | 5 mm/sec |
| Trigger force | 5 g |

The hardness of the Preparation Example after the retort heat treatment process was 2,016.9 (g), which was confirmed to be nearly twice as high as the hardness of 1,078.4 (g) of Comparative Example 12 after the retort heat treatment process (p<0.05, N=14, FIG. 5).

Accordingly, the retort ham for gimbap of the Preparation Example above has a soft yet elastic texture and unique taste and flavor, which are unique to retort ham, and has a superior hardness compared to the regular ham for gimbap, and thus, it does not lose its shape, thereby confirming that it provides convenience in cooking food such as gimbap that must maintain its shape.

From the foregoing, those skilled in the art to which the present disclosure pertains will be able to understand that the present disclosure may be embodied in other specific forms without modifying the technical concepts or essential characteristics of the present disclosure. **In** this regard, the exemplary embodiments disclosed herein are only for illustrative purposes and should not be construed as limiting the scope of the present disclosure. On the contrary, the present disclosure is intended to cover not only the exemplary embodiments but also various alternatives, modifications, equivalents, and other embodiments that may be included within the spirit and scope of the present disclosure as defined by the appended claims.

## Claims

1. A method for preparing a retort ham, comprising:
(a) mixing ground pork with a curing agent, sugar, a seasoning, and starch;
(b) aging the mixed preparation;
(c) nozzle molding the aged preparation;
(d) oven heat-treating the molded preparation;
(e) vacuum packaging the heat-treated preparation with a heat-resistant film; and
(f) subjecting the packaged preparation to retort heat treatment.

2. The method of claim 1, wherein the retort ham is prepared in a rectangular cuboid shape.

3. The method of claim 1, wherein the grinding involves cutting pork into a size of 1 mm to 4 mm.

4. The method of claim 1, wherein Step (a) comprises mixing by further adding purified water.

5. The method of claim 1, wherein Step (a) is performed at 0°C to 9°C.

6. The method of claim 1, wherein the mixing comprises:
(i) rotating at 35 rpm to 55 rpm for 1 to 3 minutes; and
(ii) rotating at 35 rpm to 55 rpm for 3 to 5 minutes under vacuum.

7. The method of claim 6, wherein the step of rotating at 35 rpm to 55 rpm for 1 to 3 minutes is repeated 2 to 4 times.

8. The method of claim 6, wherein the vacuum is performed at 0.01 MPa to 0.1 MPa.

9. The method of claim 1, wherein the aging is performed at 1°C to 5°C for 15 to 18 hours.

10. The method of claim 1, wherein the preparation is molded in a rectangular cuboid shape.

11. The method of claim 1, wherein the oven heat treatment is performed at 110°C to 120°C for 6 to 8 minutes.

12. The method of claim 1, wherein the oven heat treatment is performed within 1 to 9 minutes after molding.

13. The method of claim 1, wherein the method further comprises direct fire cooking after oven heat treatment.

14. The method of claim 13, wherein the direct fire cooking is performed by treating the oven heated-preparation with a torch for 3 to 30 seconds.

15. The method of claim 1, the method further comprises cooling after oven heat treatment.

16. The method of claim 15, wherein the cooling is performed at -5°C to 1°C for 5 to 15 minutes.

17. The method of claim 1, wherein the retort heat treatment comprises:
primary sterilization by heat treatment at 100°C to 120°C for 1 to 10 minutes;
secondary sterilization by heat treatment at 105°C to 125°C for 1 to 10 minutes; and
tertiary sterilization by heat treatment at 110°C to 130°C for 15 to 35 minutes.

18. The method of claim 1, the method further comprises cooling after retort heat treatment.

19. The method of claim 18, wherein the cooling is performed at 20°C to 30°C for 5 to 30 minutes.

20. The method of claim 1, wherein the prepared retort ham has a hardness of 1.1 kg to 2.5 kg.

21. A retort ham prepared by the method of any one of claims 1 to 20.
